# EUROPEAN PATENT APPLICATION

(11) **EP 2 426 534 A2**
(43) Date of publication of application: **07.03.2012**
(21) Application number: 11180364.9
(22) Date of filing: 07.09.2011
(51) Int. Cl.: G02B 6/122, G06F 3/041

(54) **Optical waveguide and optical touch panel**

(30) Priority: 07.09.2010 JP 2010199592
(71) Applicant: Nitto Denko Corporation, Ibaraki-shi Osaka 567-8680 (JP)
(72) Inventor: Goto, Chisato, Osaka, 567-8680 (JP); Juni, Noriyuki, Osaka, 567-8680 (JP); Nagafuji, Akiko, Osaka, 567-8680 (JP)
(74) Representative: HOFFMANN EITLE

(57) **Abstract**

An optical waveguide (10) of the present invention includes a light-absorptive section (12) formed in a recess of a clad (11). The light-absorptive section (12) prevents unwanted light from traveling through the clad (11). The light-absorptive section (12) absorbs light at all wavelengths (infrared light, visible light, and ultraviolet light). The light-absorptive section (12) is located adjacent to a light-receiving element (13). In the case where there is a light-absorptive section (12), cores (14) are encircled by the thin clad (11) and the thin clad (11) encircling respective cores (14) is encircled by the light-absorptive section (12).

## Description

### TECHNICAL FIELD OF THE INVENTION

The present invention relates to an optical waveguide and, in particular, to an optical waveguide in which a clad has a recess wherein a light-absorbing material for absorbing light at all wavelengths (infrared light, visible light, and ultraviolet light) is provided. The present invention further relates to an optical waveguide including a clad for absorbing light at wavelengths other than wavelengths of a light-emitting element and to an optical touch panel including such an optical waveguide.

### BACKGROUND ART

Since optical touch panels have high optical transmittance in coordinate input regions, images are bright and clear. Optical touch panels are hardly deteriorated, resulting in high reliability because there are neither electrodes nor sensors in the coordinate input regions. Therefore, these optical touch panels are widely used for ATMs in banking facilities and automatic ticket machines used by the general public.

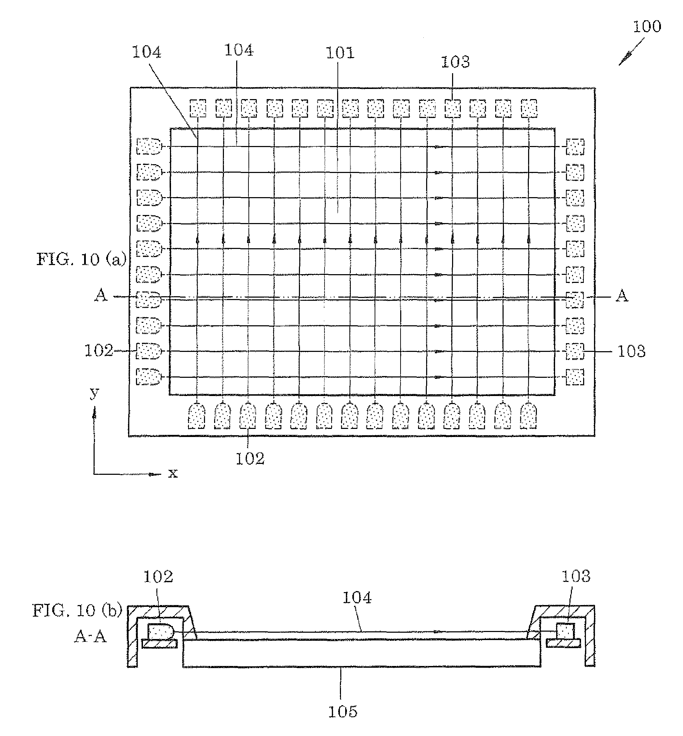

FIG. 10 shows one example of a conventional optical touch panel 100. In the conventional optical touch panel 100, as shown in FIG. 10(a), a large number of light-emitting elements 102 are aligned on two adjacent sides encircling a rectangular coordinate input region 101.

Further, a large number of light-receiving elements 103 are aligned on other two sides adjacent to each other. Respective light-emitting elements 102 are opposed to respective light-receiving elements 103 with the intervention of the coordinate input region 101. Light beams 104 emitted from the light-emitting elements 102 form lattices of the light beams 104 in the coordinate input region 101. Generally, infrared light is used as the light beams 104. An image display device 105 is mounted downwardly of the coordinate input region 101.

The light beams 104 emitted from the light-emitting elements 102 traverse the coordinate input region 101 to enter the opposed light-receiving elements 103. When the light beams 104 in the coordinate input region 101 are blocked by input means such as a finger or a pen (hereinafter collectively referred to as "finger"), the received light intensity of the light-receiving elements 103 corresponding to the blocked light beams 104 becomes lower. This makes it possible to detect x and y coordinates of a finger located in the coordinate input region 101.

Outside light enters the light-receiving elements 103 in addition to the light beams 104 emitted from the light-emitting elements 102 when the optical touch panel 100 is exposed to intense outside light such as direct sunlight. In the case where outside light enters, the received light intensity of the light-receiving elements 103 is less subject to be lower, although the light beams 104 emitted from the light-emitting elements 102 are blocked by a finger. As a result, there is a case that it is impossible to accurately detect x and y coordinates of the finger.

To prevent an impact from outside light to enter the light-receiving elements 103, conventionally, the following inventions have been made:

In an optical touch panel disclosed in JP 11-86698 A, a light-blocking member is provided on an inner surface or an outer surface of a bezel (protective cover) for covering light-emitting elements and light-receiving elements. Outside light hardly enters the light-receiving elements because outside light is blocked by the light-blocking member. There is, however, a possibility of light beams emitted from the light-emitting elements being blocked when blocking light nearly parallel to the coordinate input region. Accordingly, the range of shielding light is limited and it is difficult for outside light nearly parallel to the coordinate input region to enter the light-receiving elements.

In each optical touch panel disclosed in JP 2003-99202 A (Optical Touch Panel Device) and JP 2003-99203 A (Optical Touch Panel Device), a parallel or diagonal light-blocking plate is disposed between light-receiving elements. Since outside light is blocked by the light-blocking plate, outside light hardly enters the light-receiving elements. There is, however, a possibility that light beams emitted from the light-emitting elements could be also blocked when blocking light nearly parallel to a coordinate input region. Accordingly, there is a limit in a light blocking range, so that it is difficult to prevent outside light nearly parallel to the coordinate input region from entering the light-receiving elements.

In an optical touch panel disclosed in JP 2002-149330 A (Light-blocking slit, light-receiving element with light-blocking slit and optical touch panel device), a cylindrical light-blocking slit is disposed on a front surface of respective light-receiving elements. Outside light does not easily enter the light-receiving elements because outside light is blocked by the light-blocking slit. There is, however, a possibility that light beams emitted from light-emitting elements could also be blocked when blocking light nearly parallel to a coordinate input region. Accordingly, there is a limit in a light-blocking range, so that it is difficult to prevent outside light nearly parallel to the coordinate input region from entering the light-receiving elements.

In an optical touch panel disclosed in Japanese Unexamined Patent Application Publication No. JP 2009-252203 A (Slit for Optical Touch Panel, and Optical Touch Panel), a cylindrical light-blocking slit having a conic trapezoid-shape inner surface is disposed on a front surface of light-emitting and light-receiving elements. The light-blocking slit increases parallelism of light emitted from the light-emitting elements. Alternatively, it is difficult for outside light to enter the light-receiving elements because outside light is blocked by the light-blocking slit. There is, however, a possibility that light beams emitted from light-emitting elements could also be blocked when blocking light nearly parallel to the coordinate input region. Accordingly, there is a limit in a light-blocking range, so that it is difficult to prevent outside light nearly parallel to the coordinate input region from entering the light-receiving elements.

In an optical touch panel disclosed in JP 05-94255 A (Optical Touch Panel Utilizing Modulated Light Beam), a modulated light beam projecting means and a modulated light beam receiving means are provided between a light-emitting element and a light-receiving element. First, a signal level of the light-receiving element (low-level signal) is recorded when the light-emitting element is turned off. Next, a signal level of the light-receiving element (high-level signal) is recorded when the light-emitting element is turned on. When there is no outside light, there is a big difference between the low-level signal and the high-level signal. When there is outside light, there is a small difference between the low-level signal and the high-level signal. Subsequently, complicated signal processing is performed to eliminate the impact of outside light. As a result, a complicated arithmetic circuit with which an ordinary optical touch panel is not equipped is needed.

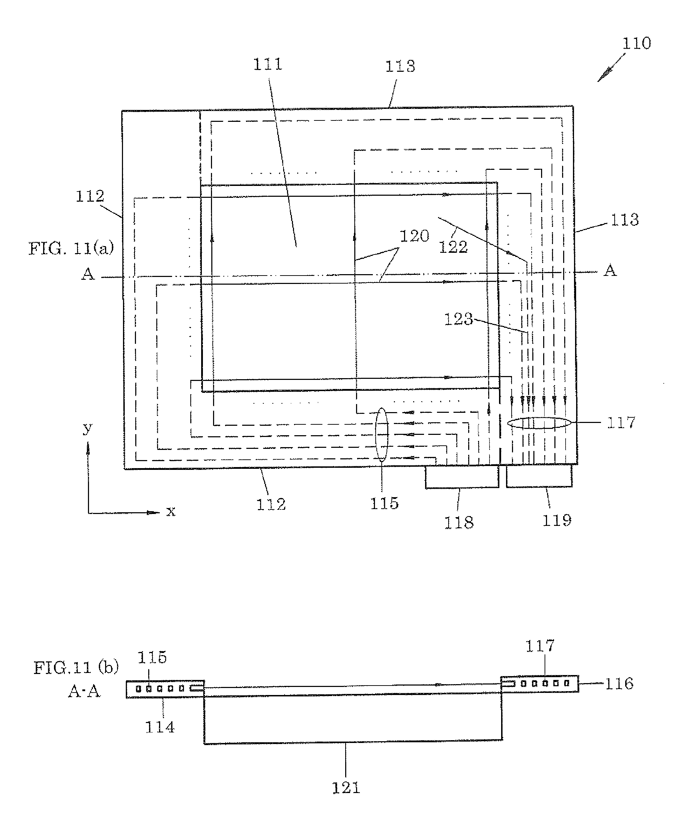

An optical touch panel 110 disclosed in JP 2008-181411 A (Optical Waveguide for Touch Panel) is an optical touch panel 110 using an optical waveguide shown in FIG. 11. In the optical touch panel 110 shown in FIG. 11, light-emitting-sided optical waveguides 112 are aligned on two adjacent sides encircling a rectangular coordinate input region 111 and light-receiving-sided optical waveguides 113 are aligned on other two adjacent sides. Respective light-emitting-sided optical waveguides 112 are configured such that cores 115 are embedded in a clad 114. The light-receiving-sided optical waveguides 113 are configured such that cores 117 are embedded in a clad 116. And one end of each core 115 of each light-emitting-sided optical waveguide 112 is optically coupled to a light-emitting element 118. One end of each core 117 of each light-receiving-sided optical waveguide 113 is optically coupled to a light-receiving element 119. Respective light-emitting sections of the light-emitting-sided optical waveguides 112 and respective light-receiving sections of the light-receiving-sided optical waveguides 113 are positioned opposite to each other with the intervention of the coordinate input region 111. Light beams 120 emitted from the light-emitting sections of the light-emitting-sided optical waveguides 112 form lattices of the light beams 120 in the coordinate input region 111. Infrared light is generally used as such light beams 120. An image display device is disposed downwardly of the coordinate input region 111.

Light emitted from a light-emitting element 118 passes through the cores 115 of the light-emitting-sided optical waveguides 112 and then is emitted to the coordinate input region 111. And light traverses the coordinate input region 111 to enter the cores 117 of the light-receiving-sided optical waveguides 113 positioned opposite to the light-emitting-sided optical waveguides 112. After light having entered the cores 117 of the light-receiving-sided optical waveguides 113 passes through the cores 117, the light enters the light-receiving element 119. The received light strength of the light-receiving element 119 is reduced by blocking the light beams 120 in the coordinate input region 111 with a finger. This makes it possible to detect x and y coordinates of the finger located in the coordinate input region 111.

In an optical touch panel disclosed in JP 11-86698 A, JP 2003-99202 A, JP 2003-99203 A, JP 2002-149330 A, JP 2009-252203 A, and JP 05-94255 A, as shown in FIG. 10, light-receiving elements 103 are positioned near a coordinate input region 111. The light-receiving elements 103 are susceptible to the effect of outside light. As shown in FIG. 11, the light-receiving element 119 is away from the coordinate input region 111 in the optical touch panel 110 disclosed in JP 2008-181411 A. Therefore, the light-receiving element 119 is insusceptible to the effect of outside light.

The optical touch panel 110 disclosed in JP 2008-181411 A is more insusceptible to the effect of outside light than respective optical touch panels disclosed in JP 11-86698 A, JP 2003-99202 A, JP 2003-99203 A, JP 2002-149330 A, JP 2009-252203 A, and JP 05-94255 A. As shown in FIG. 11, outside light 122 enters the clad 116 from the periphery of the coordinate input region 111 and travels through the clad 116, which may result in entering of the light-receiving element 119. Accordingly, it is impossible to perfectly prevent the outside light 122 from entering the light-receiving element 119, unless unwanted light 123 traveling through the clad 116 is blocked.

### SUMMARY OF THE INVENTION

It is an object of the present invention to prevent outside light nearly parallel to a coordinate input region from entering a light-receiving element. It is impossible to block outside light nearly parallel to a coordinate input region with a light-blocking member. It is another object of the present invention to prevent outside light having entered a clad or light leaking from cores from traveling through the clad as unwanted light in order to enter a light-receiving element.

According to the present invention, there is provided an optical waveguide which comprises: cores; and a clad wherein the cores are embedded. The clad has a recess which is not in contact with the cores and a light-absorptive section is formed in the recess. The light-absorptive section prevents unwanted light from traveling through the clad. A plurality of light-absorptive sections may be formed. Respective cores are encircled by a thin clad and outer side thereof is covered with the light-absorptive section where there is a light-absorptive section.

In particular, the light-absorptive section absorbs light at all wavelengths of infrared light, visible light, and ultraviolet light.

At least two light-absorptive sections are formed, where at least one light-absorptive section out of the light-absorptive sections is located adjacent to a light-receiving element.

The light-absorptive section is a bezel-shape light-absorptive section formed on substantially whole surface of the clad excluding a position where emission of light from the cores is hindered or a position where entering of light to the cores is hindered. Although the bezel-shape light-absorptive section is configured in much the same manner as the aforementioned light-absorptive section, forming the bezel-shape light-absorptive section on substantially whole surface of the clad prevents outside light from entering the clad. On the other hand, the aforementioned light-absorptive section formed on a portion of the clad absorbs unwanted light traveling through the clad. Accordingly, the bezel-shape light-absorptive section differs from the aforementioned light-absorptive-section in function.

According to the present invention, there is provided an optical waveguide which comprises: cores; and a clad wherein the cores are embedded. The clad transmits only light of wavelengths near wavelengths of a light-emitting element.

According to the present invention, there is provided an optical touch panel which comprises: a light-emitting sided-optical waveguide; a coordinate input region; and a light-receiving sided-optical waveguide, wherein at least the light-receiving sided-optical waveguide is one of the aforementioned optical waveguides.

### EFFECTS OF THE INVENTION

According to the present invention, the following advantages are obtained.
(1) In an optical waveguide of the present invention, outside light hardly reaches a light-receiving element because outside light is absorbed by a light-absorptive section formed in a recess of a clad even when outside light enters the clad to travel thorough the clad.
(2) In the optical waveguide of the present invention, light hardly reaches the light-receiving element because light is absorbed by the light-absorptive section formed in a recess of a clad, although light which travels through the cores leaks to the clad halfway and travels through the clad.
(3) In the optical waveguide of the present invention, outside light is prevented from entering the clad by a bezel-shape light-absorptive section to cover substantially whole surface of the clad.
(4) In the optical waveguide of the present invention, the clad transmits only light of wavelengths near wavelengths of a light-emitting element. Therefore, even when outside light enters the clad, light of wavelengths other than the wavelengths near the wavelengths of the light-emitting element is absorbed and does not travel through the clad. As a result, outside light does not reach the light-receiving element.
(5) An optical touch panel of the present invention includes an optical waveguide having a light-absorptive section in a recess of a clad as a light-receiving-sided optical waveguide. Accordingly, even in strong outside light such as direct sunlight, unwanted light in the clad is absorbed by a light-absorptive section and does not reach the light-receiving element. This makes it possible to accurately detect x and y coordinates of a finger located in a coordinate input region regardless of strong outside light.
(6) The optical touch panel of the present invention includes an optical waveguide wherein substantially the whole surface of the clad is covered with the bezel-shape light-absorptive section as a light-receiving-sided optical waveguide. This makes it possible to prevent outside light from entering the clad, even in intense light such as direct sunlight. As a result, it is possible to accurately detect x and y coordinates of the finger located in the coordinate input region, even in intense outside light.
(7) The optical touch panel of the present invention includes an optical waveguide as a light-receiving-sided optical waveguide, wherein the clad transmits only light of wavelengths near wavelengths of the light-emitting element. This makes light of wavelengths other than the wavelengths near the wavelengths of the light-emitting element impossible to travel through the clad. Regardless of intense outside light, there is little energy as far as the vicinity of the wavelengths of the light-emitting elements is concerned. Accordingly, it is possible to accurately detect the x and y coordinates of the finger located in the coordinate input region, even in intense outside light such as direct sunlight.

For a full understanding of the present invention, reference should now be made to the following detailed description of the preferred embodiments of the invention as illustrated in the accompanying drawings.

### BRIEF DESCRIPTION OF THE DRAWINGS

FIG. 1(a) is a plan view of an optical waveguide according to the present invention;
FIG. 1(b) is a partial enlarged view of the vicinity of a light-absorptive section of the optical waveguide according to the present invention;
FIG. 1(c) is a cross-sectional view of a portion of the optical waveguide according to the present invention without a light-absorptive section taken along A-A line;
FIG. 1(d) is a cross-sectional view of a portion of the optical waveguide according to the present invention with a light-absorptive section taken along B-B line;
FIG. 1(e) is a cross-sectional view of a portion of the optical waveguide according to the present invention with a light-absorptive section taken along the B-B line;
FIG. 2(a) is a plan view of an optical waveguide according to the present invention;
FIG. 2(b) is an enlarged partial cross-sectional view of the optical waveguide according to the present invention taken along A-A line;
FIG. 2(c) is an enlarged partial cross-sectional view of the optical waveguide according to the present invention taken along the A-A line;
FIG. 3(a) is a plan view of an optical waveguide according to the present invention;
FIG. 3(b) is a partial cross-sectional view of the optical waveguide according to the present invention;
FIG. 3(c) is a partial cross-sectional view of the optical waveguide according to the present invention;
FIG. 4(a) is a plan view of an optical waveguide according to the present invention;
FIG. 4(b) is an enlarged partial view of the vicinity of a light-absorptive section of the optical waveguide according to the present invention;
FIG. 4(c) is a partial cross-sectional view of a portion of the optical waveguide according to the present invention without a light-absorptive section taken along A-A line;
FIG. 4(d) is a partial cross-sectional view of a portion of the optical waveguide according to the present invention with a light-absorption section taken along B-B line;
FIG. 5(a) is a plan view of an optical touch panel according to the present invention;
FIG. 5 (b) is an enlarged partial view of the vicinity of a light-receiving sided-optical waveguide of the optical touch panel;
FIG. 5(c) is a partial cross-sectional view of a portion of the optical touch panel according to the present invention without a light-absorptive section taken along A-A line;
FIG. 5(d) is a partial cross-sectional view of a portion of the optical touch panel according to the present invention with a light-absorptive section taken along B-B line.
FIG. 6(a) is a plan view of an optical touch panel according to the present invention;
FIG. 6(b) is a cross-sectional view of the optical touch panel according to the present invention taken along A-A line;
FIG. 7(a) is a plan view of an optical touch panel according to the present invention;
FIG. 7(b) is a cross-sectional view of the optical touch panel according to the present invention taken along B-B line;
FIG. 7(c) is an enlarged partial cross-sectional view of the optical touch panel according to the present invention taken along the B-B line;
FIG. 7(d) is an enlarged partial cross-sectional view of the optical touch panel according to the present invention taken along C-C line;
FIG. 8(a) is a plan view of the optical touch panel according to the present invention;
FIG. 8(b) is an enlarged partial view of the vicinity of a light-absorptive section of the optical touch panel according to the present invention;
FIG. 8(c) is an enlarged partial cross-sectional view of the optical touch panel according to the present invention taken along A-A line;
FIG. 8(d) is an enlarged partial cross-sectional view of the optical touch panel according to the present invention taken along B-B line;
FIG. 9(a) is a cross-sectional view of an optical waveguide (light-emitting side) according to the present invention;
FIG. 9(b) is a cross-sectional view of an optical waveguide (light-receiving side) according to the present invention;
FIG. 10(a) is a plan view of a conventional optical touch panel;
FIG. 10(b) is a cross-sectional view of the conventional optical touch panel taken along A-A line;
FIG. 11(a) is a plan view of a conventional optical touch panel; and
FIG. 11 (b) is a cross-sectional view of the conventional optical touch panel taken along A-A line.

### DETAILED DESCRIPTION

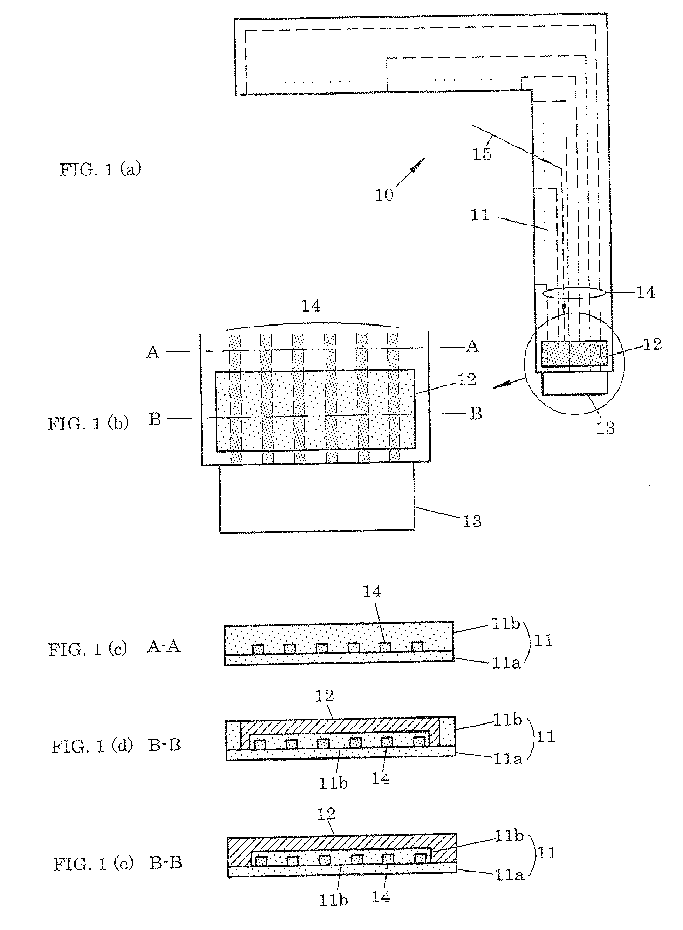

The preferred embodiments of the present invention will now be described with reference to FIGs. 1-11 of the drawings. Identical elements in the various figures are designated with the same reference numerals.

FIG. 1 illustrates an embodiment (1) of an optical waveguide 10 of the present invention. As shown in FIG. 1(a), a clad 11 has a recess and a light-absorptive section 12 in the shape of burying the recess is provided in the optical touch panel 10 being an embodiment of the present invention. The light-absorptive section 12 prevents unwanted light from traveling through the clad 11.

Although the optical waveguide 10 may have at least two light-absorptive sections, at least one light-absorptive section out of the light-absorptive sections is preferably located adjacent to a light-receiving element 13. The light-absorptive section preferably absorbs light at all wavelengths (infrared light, visible light, and ultraviolet light). The light-receiving element 13 is shown in figures because of the need to explain, although the light-receiving element 13 is not included in the optical waveguide 10.

For instance, the light-absorptive section 12 is obtained by filling an adhesive in which a black dye for absorbing light at all wavelengths (infrared light, visible light, and ultraviolet light) in a recess of the clad 11 to be cured.

As shown in FIG. 1(c), the clad 11 includes an under-clad 11a and an over-clad 11b (a combination of the under-clad 11a and the over-clad 11b is referred to as the clad 11). Cores 14 are formed on the under-clad 11a. The cores 14 are embedded by the over-clad 11b. As shown in FIG. 1(c), when there is no light-absorptive section 12, the cores 14 are encircled by the clad 11. Light travels through the cores 14 while reflecting on an interface between the cores 14 and the clad 11.

As shown in FIG. 1(d), where there is a light-absorptive section 12, a bottom surface of the cores 14 comes in contact with the under-clad 11a. A side surface and a top surface of the cores 14 are encircled by the over-clad 11b with a small thickness and the outer side thereof is encircled by the light-absorptive section 12. In the case where the cores 14 are directly encircled by the light-absorptive section 12, light does not sufficiently travel through the cores 14 because reflection of light at an interface between the cores 14 and the light-absorptive section 12 is incomplete. Accordingly, it is not suitable to directly encircle the cores 14 with the light-absorptive section 12. There are no problems with the traveling of light as long as the thin over-clad 11b for encircling the side surface and the top surface of the cores 14 has a thickness of not less than 20 µm. In the case where the thin over-clad 11b for encircling the side surface and the top surface of the cores 14 has a thickness under 20 µm, reflection of light at the interface between the cores 14 and the over-clad 11b is incomplete, which may result in an obstacle in travel of light. The phrase that a recess provided in the clad 11 "does not come in contact with the cores 14" specifically means the cores 14 are away from the recess by 20 µm or more.

As shown in FIG. 1(e), the recess of the clad 11 may be enlarged up to an end of right and left of the optical waveguide 10 to form the light-absorptive section 12 on the end of the right and left of the optical waveguide 10.

In the optical waveguide 10 being an embodiment of the present invention, even when outside light 15 enters the clad 11 to travel through the clad 11, the outside light 15 hardly reaches the light-receiving element 13 because of being absorbed by the light-absorptive section 12. While there is light traveling through the over-clad 11b with a small thickness for encircling the bottom surface of the under-clad 11a that is in contact with the cores 14 and the side surface and the top surface of the cores 14, such light is not as intense as influencing signals received by the light-receiving element 13.

In the optical waveguide 10 being an embodiment of the present invention, even when light which travels through the cores 14 leaks on the clad 11 side due to defects of an interface between the cores 14 and the clad 11 or the like and travels through the clad 11, light hardly reaches the light-receiving element because of being absorbed by the light-absorptive section 12. At this time, there is light traveling through the over-clad 11b with a small thickness for encircling the bottom surface of the under-clad 11a that is in contact with the cores 14 and the side surface and the top surface of the cores 14, such light is not as intense as influencing signals received by the light-receiving element 13.

At least two light-absorptive sections 12 may be formed. In that case, at least one light-absorptive section 12 is preferably located adjacent to the light-receiving element 13. Although it is not shown in figures, the over-clad 11b is exposed between the light-absorptive section 12 and the light-receiving element 13 when the light-absorptive section 12 is located away from the light-receiving element 13. In that case, there is a possibility that outside light could enter the light-receiving element 13 from a portion where the over-clad 11b is exposed.

It is not shown in figure, however, it is avoided that light in the clad 11 affects light in the cores 14 because unwanted light having traveled through the clad 11 is absorbed by the light-absorptive section 12 in the middle of the optical waveguide 10 (a portion except for a portion adjacent to the light-receiving element 13).

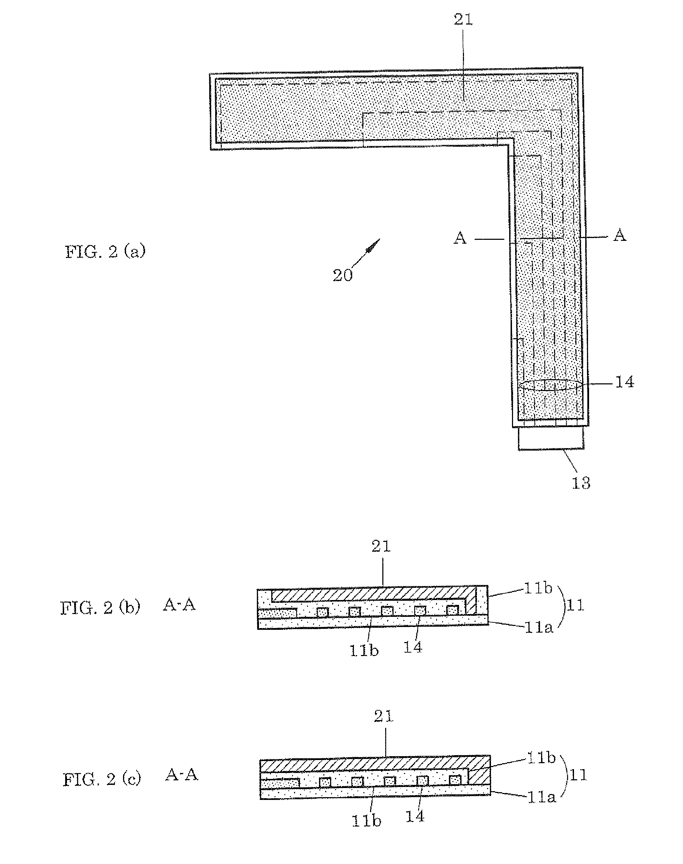

FIG. 2 illustrates a preferred embodiment (2) of an optical waveguide 20 of the present invention. As shown in FIG. 2(a), in the optical waveguide 20 of the present invention, a recess is provided on substantially whole surface of the clad 11 to form a light-absorptive material in the shape of burying the recess. The formed light-absorptive material is a bezel-shape light-absorptive section 21 to cover substantially the whole surface of the clad 11. The bezel-shape light-absorptive section 21 preferably absorbs light at all wavelengths (infrared light, visible light, and ultraviolet light). The light-absorptive section 12 shown in FIG. 1 is located in a narrow range excluding a light incident section of the cores 14. The light-absorptive section 12 shown in FIG. 1 is located adjacent to the light-receiving element 13 and absorbs unwanted light having traveled through the clad 11 just anterior to the light-receiving element 13. Accordingly, as shown in FIG. 1(d), the light-absorptive section 12 is positioned three sides such as top, left, and right.

The bezel-shape light-absorptive section 21 shown in FIG. 2 is formed in a recess provided in a wide range that covers most of the optical waveguide 20. Since this range includes a light-incident section of the cores 14, the bezel-shape light-absorptive section 21 needs to avoid the light-incident section. Consequently, as shown in FIG. 2(b), the bezel-shape light-absorptive section 21 is positioned on two sides such as the top and right of the cores 14. It is possible to prevent outside light from entering the clad 11 and the cores 14 by forming the bezel-shape light-absorptive section 21 in the clad 11.

The bezel-shape light-absorptive section 21 is obtained, for instance, by filling an adhesive in which a black dye for absorbing light at all wavelengths (infrared light, visible light, and ultraviolet light) in the recess of the clad 11 to be cured.

As shown in FIG. 2(c), the bezel-shape light-absorptive section 21 may be formed up to an end of right and left of the optical waveguide 20 by widening the recess of the clad 11 up to the end of the right and left of the optical waveguide 20.

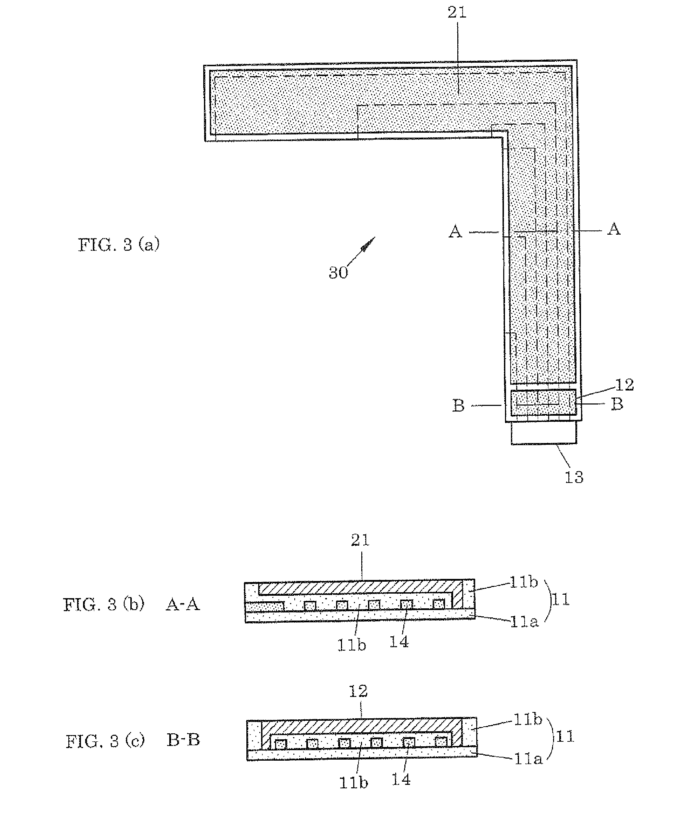

The light-absorptive section 12 shown in FIG. 1 and the bezel-shape light-absorptive section 21 shown in FIG. 2 may be used in a state of being overlapped on one optical waveguide (a description is given in FIG. 3). As shown in FIG. 3, it has a more profound effect of inhibiting an impact of outside light on the light-receiving element 13 to use the light-absorptive section 12 in FIG. 1 and the bezel-shape light-absorptive section 21 in FIG. 2 in a state of being overlapped on one optical waveguide than to use the light-absorptive section 12 in FIG. 1 and the bezel-shape light-absorptive section 21 in FIG. 2 independently for an optical waveguide.

FIG. 3 illustrates an embodiment (3) of an optical waveguide 30 of the present invention. In the optical waveguide 30 of the present invention in the embodiment (3), the light-absorptive section 12 shown in FIG. 1 and the bezel-shape light-absorptive section 21 shown in FIG. 2 are used in the state of being overlapped on one optical waveguide 30. The light-absorptive section 12 and the bezel-shape light-absorptive section 21 preferably absorb light at all wavelengths (infrared light, visible light, and ultraviolet light). The bezel-shape light-absorptive section 21 is formed on substantially the whole surface of the clad 11. When the optical waveguide 30 is irradiated with intense outside light such as direct sunlight, outside light does not enter the clad 11 because outside light is mostly absorbed by the bezel-shape light-absorptive section 21. Thus, intensity of unwanted light which enters the clad 11 to travel through the clad 11 is more remarkably reduced than unwanted light in the case of an optical waveguide without the bezel-shape light-absorptive section 21.

Even in the case where outside light enters the clad 11 from a place without being covered with the bezel-shape light-absorptive section 21 and travels through the clad 11, outside light hardly reaches the light-receiving element 13 because of being absorbed by the light-absorptive section 12. As described above, when the bezel-shape light-absorptive section 21 and the light-absorptive section 12 are used in the state of being overlapped to each other, it is possible to effectively reduce intensity of unwanted light entering the light-receiving element 13. Although there is clearance between the light-absorptive section 12 and the bezel-shape light-absorptive section 21 in FIG. 3(a), there may be no clearance therebetween.

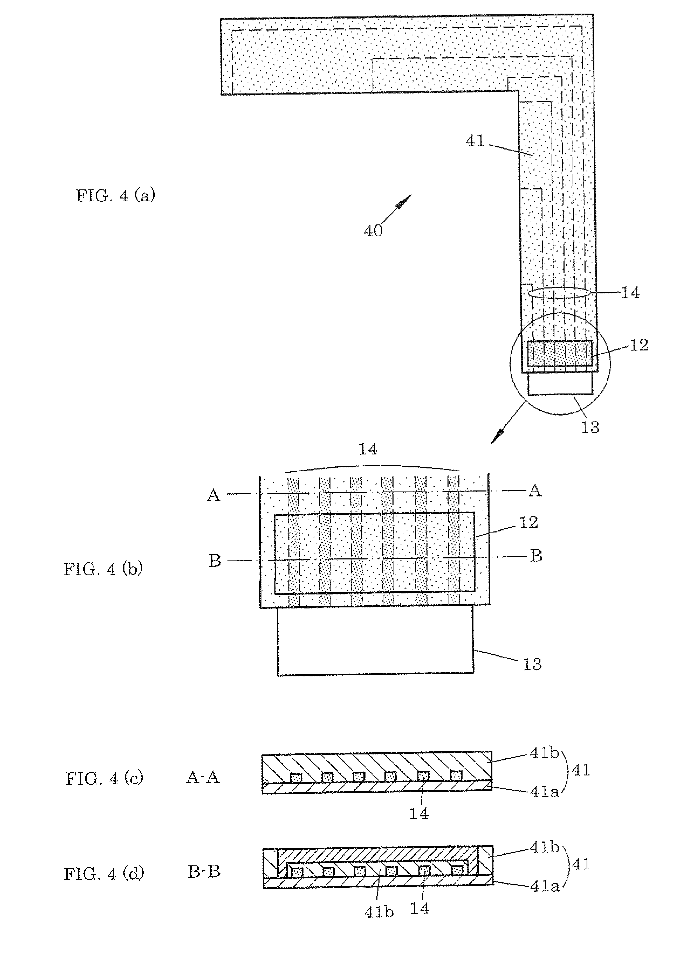

FIG. 4 illustrates an embodiment (4) of an optical waveguide 40 of the present invention. As shown in FIG. 4(a), in the optical waveguide 40 of the present invention, a clad 41 has a recess and the light-absorptive section 12 to fill the recess is provided. The clad 41 comprises: an under-clad 41a; and an over-clad 41b. The light-absorptive section 12 in FIG. 4 is the same as the light-absorptive section 12 of the optical waveguide 10 illustrated in FIG. 1. Further, the optical waveguide 40 of the present invention is characterized in that the clad 41 allows only light at a wavelength emitted from the light-emitting element to transmit and absorbs light at wavelengths other than the wavelength. For instance, the clad 41 allows only light at a wavelength emitted from the light-emitting element to transmit when a proper amount of a red pigment, a yellow pigment, and a green pigment are added to the material of the clad 41. Since the clad 41 having this characteristic is used, even in the case where the clad 41 is irradiated with intense outside light, intensity of unwanted light traveling through the clad is remarkably reduced. Accordingly, the concurrent use of the light-absorptive section 12 reduces the impact of outside light further effectively, although the impact of outside light is fully reduced even when there is no light-absorptive section 12.

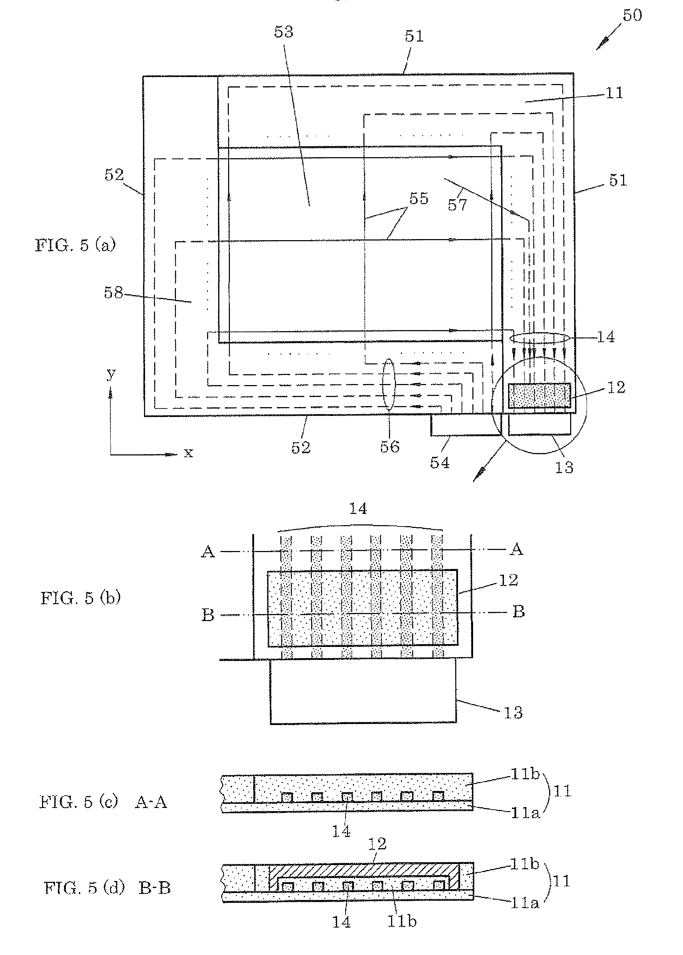

FIG. 5 illustrates an embodiment (1) of an optical touch panel 50 of the present invention. In the embodiment (1) of the optical touch panel 50 of the present invention, the optical waveguide 10 in FIG. 1 is used for light-receiving sided-optical waveguides 51.

In the optical touch panel 50 being an embodiment of the present invention, light-emitting sided-optical waveguides 52 are arranged on two adjacent sides to encircle a rectangular coordinate input region 53 and the light-receiving sided-optical waveguides 51 are arranged on other adjacent two sides. The light-emitting sided-optical waveguides 52 are configured such that cores 56 are embedded in a clad 58. The light-receiving sided-optical waveguides 51 are configured such that the cores 14 are embedded in the clad 11. The clad 11 comprises: the over-clad 11b; and the under-clad 11a. One end of each core 56 of each light-emitting-sided optical waveguide 52 is optically coupled to a light-emitting element 54 and one end of each core 14 of each light-receiving-sided optical waveguide 51 is optically coupled to the light-receiving element 13. An emitting section of each core 56 of the light-emitting-sided optical waveguide 52 is positioned opposite to an incident section of each core 14 of the light-receiving-sided optical waveguide 51 with the intervention of the coordinate input region 53. Light beams 55 emitted from the emitting section of each core 56 in the light-emitting-sided optical waveguide 52 form lattices of the light beams 55 in the coordinate input region 53. Infrared light is generally used as the light beams 55. An image display device is mounted downwardly of the coordinate input region 53.

Light emitted from the light-emitting element 54 passes through the cores 56 of the light-emitting sided-optical wavelengths 52 to be emitted to the coordinate input region 53 and then traverses the coordinate input region 53 to enter the light-receiving-sided optical waveguide 51 through the cores 14. Light having entered the cores 14 of the light-receiving-sided optical waveguides 51 passes through the cores 14 to enter the light-receiving element 13. When blocking light beams in the coordinate input region 53 with a finger or the like, the received light intensity of the light-receiving element 13 is reduced. This makes it possible to detect the x and y coordinates of the finger located in the coordinate input region 53.

As described regarding the optical waveguide 10 in FIG. 1, even in the case where outside light 57 enters the clad 11 and travels through the clad 11, outside light hardly reaches the light-receiving element 13 because of being absorbed by the light-absorptive section 12. Moreover, even in the case where light traveling through the cores 14 leaks to the clad 11 side due to defects of the interface between the cores 14 and the clad 11, light is absorbed by the light-absorptive section 12 and hardly reaches the light-receiving element 13. Accordingly, in the optical touch panel 50 of the present invention in FIG. 5, it is possible to accurately detect the x and y coordinates of the finger located in the coordinate input region 53 even in intense outside light such as direct sunlight.

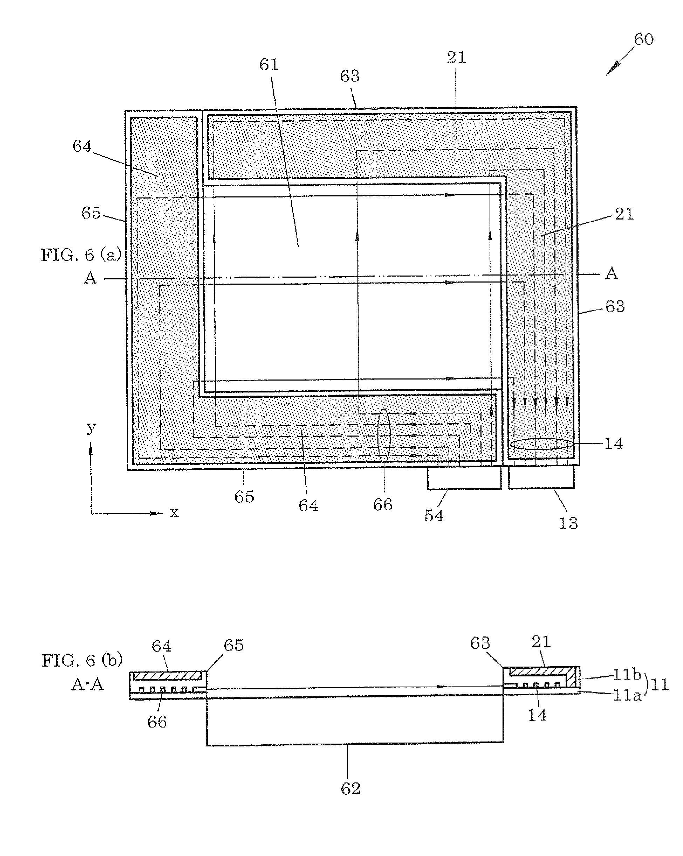

FIG. 6 illustrates an embodiment (2) of an optical touch panel 60 of the present invention. An image display device 62 is arranged downwardly of a coordinate input region 61. In the embodiment (2) of the optical touch panel 60 of the present invention, the optical waveguide 20 in FIG. 2 is used as a light-receiving-sided optical waveguide 63. Further, an optical waveguide in which a bezel-shape light-absorptive material 64 is formed which is similar to the optical waveguide 20 in FIG. 2 is used as a light-emitting-sided optical waveguide 65. However, as shown in FIG. 6(b), a bezel-shape light-absorptive section 64 is formed only upwardly of cores 66 because the light-emitting sided-optical waveguide is influenced by outside light to a small degree.

As described above regarding the optical waveguide 20 in FIG. 2, the bezel-shape light-absorptive section 21 absorbs light at all wavelengths (infrared light, visible light, and ultraviolet light). It is possible to mostly prevent outside light from entering the clad 11 and the cores 14 by forming the bezel-shape light-absorptive section 21 on the clad 11. Consequently, in the optical touch panel 60 in FIG. 6, it is possible to accurately detect x and y coordinates of the finger located in the coordinate input region 61, even in intense outside light such as direct sunlight.

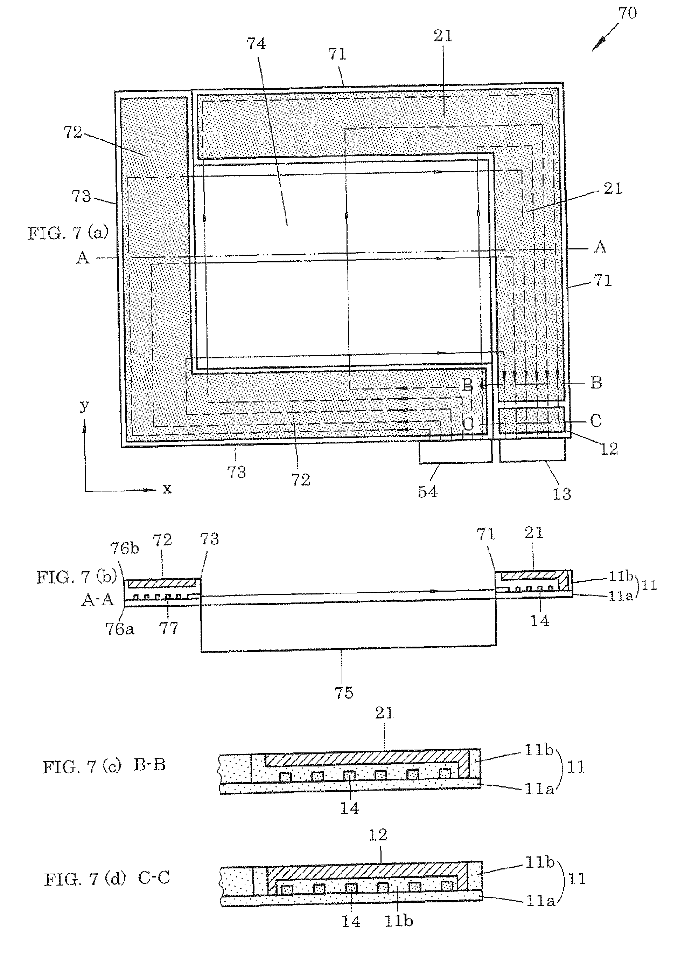

FIG. 7 illustrates an embodiment (3) of an optical touch panel 70 of the present invention. In the optical touch panel 70 of the present invention in the embodiment (3), an optical waveguide including both the light-absorptive section 12 in FIG. 1 and the bezel-shape light-absorptive section 21 in FIG. 2 is used as a light-receiving-sided optical waveguide 71. Further, an optical waveguide including a bezel-shape light-absorptive material 72 similar to the optical touch panel 50 in FIG. 6 is used as a light-emitting-sided optical waveguide 73. An image display device 75 is arranged downwardly of a coordinate input region 74.

In the optical touch panel 70 shown in FIG. 7, it is possible to effectively reduce intensity of outside light entering the light-receiving element 13 by the overlapping of effects of the light-absorptive section 12 and the bezel-shape light-absorptive section 21.

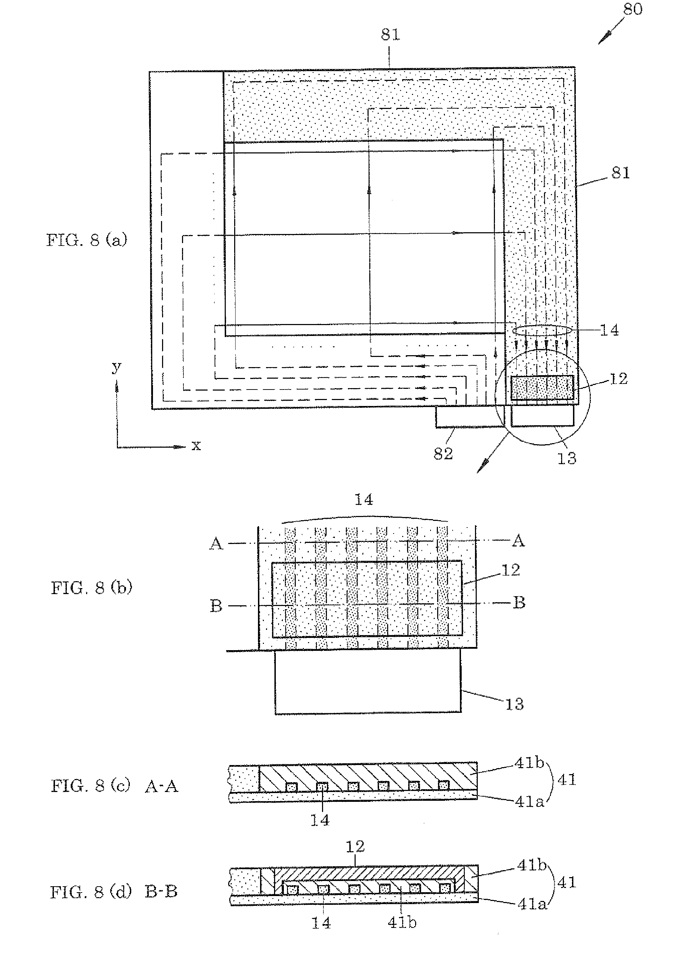

FIG. 8 illustrates an embodiment (4) of an optical touch panel 80
of the present invention. In the optical touch panel 80 shown in FIG. 8, the optical waveguide 40 in FIG. 4 is used as a light-receiving-sided optical waveguide 81. It is possible to effectively reduce the intensity of outside light entering the light-receiving element 13 by transmitting only light at a wavelength emitted from a light-emitting element 82 and concurrently using the clad 41 for absorbing light at wavelengths other than the wavelength and the light-absorptive section 12 absorbing light at all wavelengths (infrared light, visible light, and ultraviolet light).

### EXAMPLES

### [Example 1]

### [Preparation of Varnish for Forming Cladding]

A varnish for forming cladding was prepared by mixing 100 parts by weight of a UV-curable epoxy-based resin having an alicyclic skeleton (EP 4080E manufactured by ADEKA CORPORATION) and 2 parts by weight of a photo-acid-generation agent (CPI-200K manufactured by SAN-APRO Ltd.).

### [Preparation of Varnish for Forming Cores]

A varnish for forming cores was prepared by mixing 40 parts by weight of a UV-curable epoxy-based resin having a fluorene skeleton (OGSOL EG manufactured by Osaka Gas Chemicals Co., Ltd.), 30 parts by weight of 1, 3, 3-tris(4-(2-(3-oxetanyl))butoxyphenyl)butane, 1 part by weight of a photo-acid-generation agent (CPI-200K manufactured by SAN-APRO Ltd.), and 41 parts by weight of ethyl lactate. In accordance with Example 2 in JP 2007-070320 A, 1,3,3-tris(4-(2-(3-oxetanyl))butoxyphenyl)butane was synthesized.

### [Formation of Optical Waveguide]

The varnish for forming cladding was applied onto a surface of a glass having a thickness of 1.1 mm, irradiated with UV light at 1,000 mJ/cm², and thermally-treated at 80°C for 5 minutes to form under-cladding having a thickness of 20 µm. The refractive index of the under-cladding as measured at a wavelength of 830 nm was 1.510.

The varnish for forming cores was applied onto the surface of the under-cladding and thermally-treated at 100°C for 5 minutes to form a core layer. Then, the core layer was covered with a photo mask with a core pattern (gap: 100 µm) and this was irradiated with UV light (365 nm) at 2,500 mJ/cm², and thermally-treated at 100°C for 10 minutes.

Next, unirradiated portions with ultraviolet rays of the core layer were dissolved and removed by a γ-butyrolactone aqueous solution, and this was subjected to a heating treatment at 120°C for 5 minutes so that a plurality of cores having a core width of 20 µm and a core height of 50 µm were formed. The plurality of cores respectively had a refractive index of 1.592 at a wavelength of 830 nm.

Subsequently, a molding die having a concave inner surface was placed on the surface of the under-cladding so as to cover the cores, and the varnish for forming cladding was injected into the molding die. The varnish for forming cladding was irradiated with UV light at 3,000 mJ/cm² from the back side of the glass (under-cladding side) and thermally-treated at 80°C for 5 minutes to form an over-cladding layer with a thickness of 1 mm. The refractive index of the over-cladding as measured at a wavelength of 830 nm was 1.510. A light-emitting-sided optical waveguide is different from a light-receiving-sided optical waveguide in inner shape of molding die therefor. The molding die for the light-receiving-sided optical waveguide is in the shape of forming a recess for filling a light-absorptive section in a position adjacent to a light-receiving element.

As described above, a light-emitting-sided optical waveguide and a light-receiving sided-optical waveguide were prepared. Regarding the light-receiving-sided optical waveguide, a recess for filling the light-absorptive section in a portion of the over-cladding adjacent to the light-receiving element was formed by a molding die.

### [Formation of Light-absorptive Section]

A mixture of 100 parts by weight of a room temperature curable adhesive (Produced by ThreeBond Co., Ltd., Product name: 2086N) and 2 parts by weight of a black dye (Produced by Arimoto Chemical co., Ltd., Product name: Plast Black 8970) is filled in a recess formed in the over-cladding of the light-receiving-sided optical waveguide to form a light-absorptive section. This black dye absorbs light at all wavelengths (infrared light, visible light, and ultraviolet light). As shown in FIG. 1, the recess provided in the over-cladding is located adjacent to the light-receiving element. There are no bezel-shape light-absorptive sections in the light-receiving-sided optical waveguide and the light-emitting-sided optical waveguide in Example 1.

### [Preparation of Optical Waveguide Device]

A light-emitting element (manufactured by Optwell; Product name: VCSEL) emitting infrared light at a wavelength of 850 nm was optically coupled to one end of the light-emitting-sided optical waveguide to prepare a light-emitting sided-optical waveguide device. On the other hand, a light-receiving element (a CMOS linear sensor manufactured by Hamamatsu Photonics K.K.) was optically coupled to one end of the light-receiving-sided optical waveguide to prepare a light-receiving-sided optical waveguide device.

### [Preparation of Optical Touch Panel]

A type 12 optical touch panel was prepared by aligning the light-emitting-sided optical waveguide device and the light-receiving-sided optical waveguide device opposite to each other so that light beams emitted from cores of the light-emitting-sided optical waveguide device may accurately enter the light-receiving-sided optical waveguide device.

### [Example 2]

A type 12-inch optical touch panel of Example 2 was prepared in the same material and method as in Example 1. As shown in FIG. 7, Example 2 is different from Example 1 in that a recess is provided in a wide range of each clad of the light-emitting-sided optical waveguide and the light-receiving-sided optical waveguide and then an adhesive mixed with a black dye similar to that of Example 1 is filled to form a bezel-shape light-absorptive section.

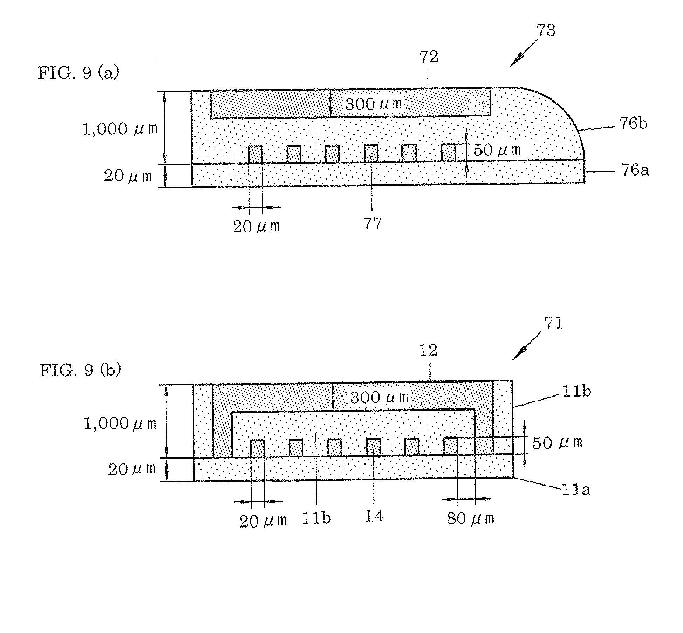

FIG. 9(a) shows a cross section of a light-emitting sided-optical waveguide 73. FIG. 9(b) shows a cross section of a light-receiving-sided optical waveguide 71 of the optical touch panel in Example 2. FIG. 9(b) is a cross-sectional view of a place where the light-absorptive section 12 is positioned. As shown in FIG. 9(a), under-cladding 76a has a thickness of 20 µm and over-cladding 76b has a thickness of 1,000 µm, each core 77 has a width of 20 µm and a height of 50 µm, and a bezel-shape light-absorptive section 72 has a thickness of 300 µm in the light-emitting optical waveguide 73.

As shown in FIG. 9(b), in the light-receiving-sided optical waveguide 71, the under-clad 11a has a thickness of 20 µm and the over-clad 11b has a thickness of 1,000 µm. And each core 14 has a width of 20 µm and a height of 50 µm. The light-absorptive section 12 has a thickness of 300 µm and the side interval between the cores 14 and the light-absorptive section 12 is 80 µm.

### [Example 3]

A type 12-inch optical touch panel in Example 3 was prepared in the same material (except for a clad of the light-receiving-sided optical waveguide) and method as in Example 1. As shown in FIG. 8, Example 3 is different from Example 1 in that a clad of the light-receiving-sided optical waveguide allows infrared light at about a wavelength of 850 nm to transmit and absorb light at wavelengths other than the wavelength. To provide the clad of the light-receiving-sided optical waveguide with this characteristic, 100 parts by weight of EP4080E manufactured by ADEKA CORPORATION, 2 parts by weight of CPI-200K manufactured by SAN APRO Ltd., 0.05 part by weight of a red pigment (manufactured by Arimoto Chemical Co., Ltd., product name: Plast Red 8335), 0.05 part by weight of a yellow pigment (manufactured by Arimoto Chemical Co., Ltd., product name: Plast Yellow 8070), and 0.05 part by weight of a green pigment (manufactured by Arimoto Chemical Co., Ltd., product name: Plast Green 8620) were mixed when preparing a material for the clad.

### [Comparative Example]

A type 12-inch optical touch panel of Comparative Example was prepared by the same material and the same method as in Example 1 except for not performing measures against outside light (light-absorptive section, bezel-shape light-absorptive section, and a clad for absorbing light).

### [Evaluation]

In respective optical touch panels in Examples 1 to 3 and Comparative Example, when light having an intensity of 7 mW was emitted from the light-emitting element in a dark room, light having an intensity of 3 mW was respectively received at the light-receiving element. Accordingly, when the intensity of outside light noise, in which the light-emitting element is not emitted, is close to 3 mW, it is impossible to correctly detect x and y coordinates of the finger.

Next, in respective optical touch panels in Examples 1 to 3 and Comparative Example, the intensity of light received at the light-receiving element in a dark room, under fluorescent lights, and in direct sunlight was measured. The light-emitting element at this time was not emitted. Table 1 shows a measuring result. Further, the Table 1 shows the intensity of outside light noise when the light-emitting element is not emitted.

**Table 1**

| Intensity of outside light noise (mW) | | | |
|---|---|---|---|
| Place | In dark room | Under fluorescent lights | In direct sunlight |
| Outside light intensity (lux) | 0 | 800 | 100,000 |
| Example 1 | 0.3 | 0.3 | 0.7 |
| Example 2 | 0.3 | 0.3 | 0.3 |
| Example 3 | 0.3 | 0.3 | 0.3 |
| Comparative Example | 0.3 | Over 3 | Over 3 |

In respective optical touch panels in Examples 1 to 3, the intensity of outside light noise is close to the intensity in a dark room or under fluorescent lights or in direct sunlight, either. As a result, it is possible to use the optical touch panels in Examples 1 to 3 under fluorescent lights and in direct sunlight. Particularly, in the optical touch panels in Examples 2 and 3, the intensity of the outside light noise is not changed between in the dark room and in direct sunlight. In the optical touch panel in Comparative Example, the intensity of the outside light noise is also over 3 mW under fluorescent lights, which has a high possibility of malfunction. Due to this, it is preferable to avoid the use of the optical touch panel under fluorescent lights and in direct sunlight.

### [Measurement Methods]

### [Refractive Index]

A varnish for forming cladding and a varnish for forming cores were respectively applied onto a silicon wafer by spin coating to form a film of the varnish, and the silicon wafer was used as a sample for measuring the refractive index of a cladding and cores. Measurement of refractive index was performed using a prism coupler (manufactured by Sairon Technology, Inc., product name: SPA-400).

### [Width and Height of Core]

The prepared optical waveguide was cut crosswise using a dicing saw (DAD522 manufactured by DISCO Corporation), and the cutting surface of the optical waveguide was observed using a laser microscope (manufactured by Keyence Corporation) to measure the width and height of each core.

### INDUSTRIAL APPLICABILITY

The applications of the optical waveguide of the present invention are not particularly limited. The optical waveguide of the present invention is preferably used for the optical touch panel of the present invention. Since the optical touch panel of the present invention is insusceptible to deterioration caused by a touch and has high reliability and in addition to that, insusceptible to the impact of outside light, the optical touch panel of the present invention is preferably applied to automatic ticket machines and ATMs in banking facilities installed at a place receiving intense outside light such as direct sunlight.

## Claims

1. An optical waveguide (10) comprising:
Cores (14); and
a clad (11) wherein the cores are embedded,
wherein the clad (11) has a recess which is not in contact with the cores (14) and a light-absorptive section (12) is formed in the recess.

2. The optical waveguide according to claim 1, wherein the light-absorptive section (12) absorbs light at all wavelengths of infrared light, visible light, and ultraviolet light.

3. The optical waveguide according to claim 1 or 2,
wherein at least two light-absorptive sections (21) are formed, where at least one light-absorptive section (12) out of the light-absorptive sections (12) is located adjacent to a light-receiving element (13).

4. The optical waveguide according to claim 1 or 2,
wherein the light-absorptive section (21) is a bezel-shape light-absorptive section (21) formed on substantially whole surface of the clad (11) excluding a position where emission of light from the cores (14) is hindered or a position where entering of light to the cores (14) is hindered.

5. An optical waveguide (40) comprising:
cores (14) and
a clad (41) wherein the cores (14) are embedded, wherein the clad (41) transmits only light of wavelengths near wavelengths of a light-emitting element (13).

6. An optical touch panel (50) comprising:
a light-emitting sided-optical waveguide (52);
a coordinate input region (53); and
a light-receiving sided-optical waveguide (51), wherein at least the light-receiving sided-optical waveguide (51) is any one of the optical waveguides (10) according to claims 1 to 5.
